# EUROPEAN PATENT SPECIFICATION

(11) **EP 0 515 200 B1**
(45) Date of publication and mention of the grant of the patent: **07.02.1996**
(21) Application number: 92304642.9
(22) Date of filing: 21.05.1992
(51) Int. Cl.: H02G 15/04, H02G 3/06

(54) **A cable gland**
Kabelverschraubung
Presse-étoupe

(30) Priority: 23.05.1991 GB 9111197
(43) Date of publication of application: 25.11.1992
(73) Proprietor: ELKAY ELECTRICAL MANUFACTURING CO. LTD., Powys SY16 4LF (GB)
(72) Inventor: Wales, Alan Charles Durward, Newcastle upon Tyne, NE13 7HQ (GB)
(74) Representative: Charlton, Peter John

(56) References cited:
- EP-A- 0 203 269
- EP-A- 0 206 896
- CH-A- 336 107
- FR-A- 1 090 753
- FR-A- 2 497 416
- FR-A- 2 583 497

## Description

This invention relates to a cable gland of plastics material.

Cable glands provide the means for allowing the entry of an electrical cable into an electrical enclosure and for securing the position of the cable. In addition to their main function of secure retention of the cable, it is desirable that cable glands prevent the ingress of dust or moisture into the enclosure. A wide variety of cable glands exist, reflecting the wide range of demands made upon them. Cable glands are generally either metallic or of plastics material. Metallic cable glands are commonly used where mechanical robustness and earthing are of importance. Plastics material cable glands are commonly used with unarmoured cables. Heavy duty glands may be made of metal or plastics material. They are used where high torque capacity and high strength are required for the gland. For general duty glands, line pull restraint is a more important criterion. The document FR-A-2 497 416 discloses a gland having the features in the preamble of Claim 1.

Very stringent industrial safety requirements have created a demand for plastics material cable glands which can withstand very high torque while conforming to strict dimensional limits. Conventional plastics material cable glands are not able to withstand the high torques required while conforming to the required design criteria.

The invention aims to provide an improved plastics cable gland with an increased torque limit.

The invention provides a plastics cable gland for an electrical enclosure comprising a fixing component, a resilient internal seal and a compression nut, each with a bore therethrough for the cable, the fixing component having a rear portion and a front threaded portion, the compression nut being threaded for engagement on the front threaded portion, wherein the front threaded portion has a larger diameter than the rear portion both externally and internally, wherein the compression nut comprises an internal inclined surface which in use abuts the seal whereby tightening of the compression nut on the fixing component forces at least part of the seal inwardly to grip the cable, the cable gland being characterised by a substantially rigid annular support member within the fixing component to the rear of the seal, the said support member having an external diameter the same or only slightly less than the internal diameter of the front portion of the fixing component and having an internal diameter substantially the same as the internal diameter of the rear portion of the fixing component.

Preferably, the inclined surface is provided by a surface of a so-called skid washer located within the compression nut. The skid washer may be retained within a groove in the compression nut body, being able to rotate freely within the groove. The skid washer ensures that twisting of the nut on the fixing component is not transferred to the seal or, accordingly, to the cable. Preferably, the skid washer has a hollow cylindrical extension to assist in the correct locating of the seal. Advantageously, there can be an annular air pocket between the skid washer and the part of the compression nut which the skid washer abuts to reduce the friction and static between the two parts.

The use of an annular support member enables the safe torque factor of the gland to be substantially increased. A high safe torque factor can only be achieved with the maximum of thread engagement between the entry component and the nut. However, when threads of hollow components are engaged and tightened, a thread climbing effect tends to occur. The exterior component may be caused to expand, or the interior component contract, leading to a reduction in thread engagement.

An obvious way to limit the deleterious thread climbing effect would be to increase the wall thickness of the front threaded portion of the gland on which the compression nut is tightened, particularly in view of the general prejudice in the art against having additional components which only increase manufacturing and assembly difficulties. A thicker front portion of the fixing component would of course lead to increased rigidity. However, while this solves one problem, it causes another. A thick-walled front portion may be more resistant to thread climbing, but problems of manufacture are such that it cannot achieve maximum thread engagement for quite different reasons. Component shrinkage is a significant factor in the manufacture of plastics components. The amount of shrinkage is dependent on the dimensions of the components being manufactured. An increased wall thickness for the front portion of the fixing would lead to a significant difference in shrinkage within the fixing component, giving rise to irregularities which would prevent full thread engagement. In other words, the wall thickness of the rear and front portions of the fixing component are preferably as substantially equal as possible.

The support member of the invention provides rigid reinforcement for the fixing component to prevent thread climbing, while allowing the component's wall dimensions to be more uniform, minimising differences in shrinkage. This leads to fuller thread engagement with the fixing nut, with the result that the safe torque factor of the cable glands is substantially higher than for conventional types.

It has also been found that the use of a separate support member inside the fixing component has additional surprising advantages over the use of a thicker walled component. A "laminating" effect between the support member and the fixing component provides for greater strength of the component. This effect can be enhanced by forming the support member from a number of concentric rigid sleeves.

In a preferred embodiment of the invention, the support member can have an inclined end face abutting the seal. This gives rise to a second sealing point on tightening of the gland. The support member may also include longitudinal extending fingers to protrude between the seal and the cable. Circular ridges may be provided on the face of the fixing component which abuts the enclosure, to prevent ingress of moisture and dust.

Specific embodiments of cable glands according to the invention are described below, by way of example, with reference to the accompanying diagrams, in which:
Figure 1 is a half sectional and half elevational view of a first embodiment of a cable gland according to the invention, with the seal in a relaxed position;
Figure 2 is a view similar to that of Fig. 1 but with the seal compressed;
Figure 3 is a half sectional and half elevational view of a second embodiment of a cable gland according to the invention, with the seal in a relaxed position;
Figure 4 is a view similar to Fig. 3 but with the seal compressed;
Figures 5a and 5b to 9a and 9b are end views and sectional views respectively of alternative annular support members for use in the embodiments of Figures 1 and 3.

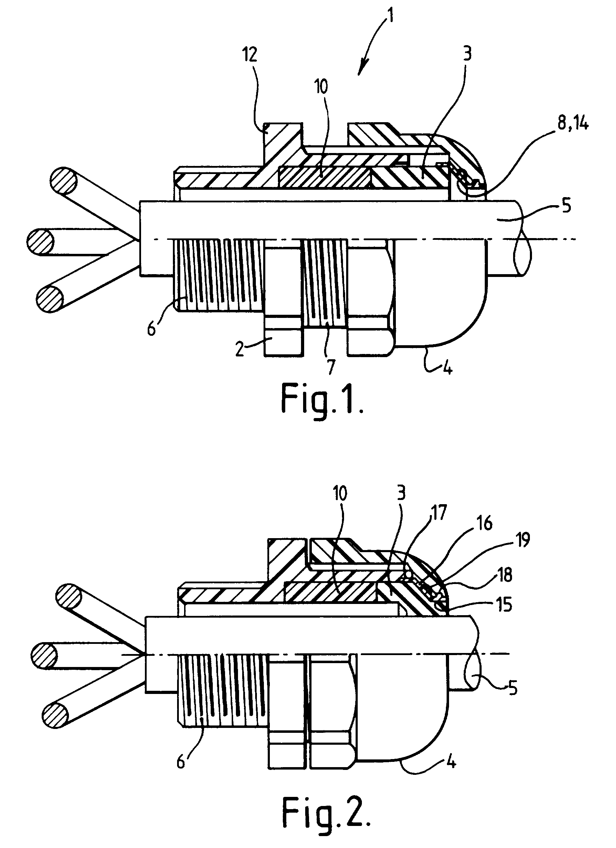

Figure 1 shows a plastics cable gland 1 for an electrical enclosure (not shown) comprising a fixing component 2, a resilient internal seal 3 and a compression nut 4, each with a bore therethrough for the cable 5. The fixing component 2 has a rear portion 6 which is typically threaded and a front threaded portion 7, the compression nut 4 being internally threaded for engagement on the front threaded portion 7. The front threaded portion 7, as is apparent from Figure 1, has a larger diameter than the rear threaded portion 6 both externally and internally and the hollow cylindrical seal 3 is sealed in the interior of the front portion 7. The compression nut 4 has an internal inclined surface 8 which in use abuts one end of the seal 3 whereby tightening of the nut 4 on the fixing component 2 forces at least part of the seal 3 inwardly to grip the cable 2. This position is shown in Figure 2.

Figures 1 and 2 also show a substantially rigid annular support member 10 within the fixing component 2 to the rear of the seal 3, the support member 10 having an external diameter the same or only slightly less than the internal diameter of the front portion 7 of the fixing component and having an internal diameter substantially the same as the internal diameter of the rear portion 6 of the fixing component. Thus, the internal and external diameters of the support member 10 are substantially the same as those of the seal 3 when it is in the relaxed condition, which results in the rear portion 6, the support member 10, the seal 3 and the nut 4 defining a substantially smooth bore, of even diameter, to facilitate insertion of the cable 5.

Between the rear and front portions of the fixing component 2 there is a flange 12. The rear surface of the flange 12 in use abuts the surface of the enclosure into which the cable gland fitted, typically by screwing. To assist in the prevention of moisture and dust entering into the enclosure, the rear surface can be provided with a series of circular ridges (not shown) which form a plurality of seals when the gland is tightened against the enclosure. The periphery of the flange 12 is hexagonal so that it can be tightened by a spanner or similar tool.

For the same reason, the rear external part of the compression nut 4 is also hexagonal. The front part is generally dome-shaped, to provide a smooth finish to the article when in use.

The fixing component 2, the nut 4 and the support member 10 may be made of any suitable conventional plastics material and can all be moulded from the same material, for example nylon 66.

The seal 3 is a simple hollow cylinder in shape and is formed of a resilient material, for example rubber.

The inclined face 8 of the nut 4 which abuts the seal 3 is, in the illustrated embodiment, provided by a skid washer 14 fitted inside the forward part of the nut 4. The skid washer 14 has a first cylindrical part 15 of an internal diameter similar to that of the interior of the rear portion 6 of the fixing component 2, a frusto-conical part 16 which forms the said inclined surface 8, and a second cylindrical part 17 of an internal diameter similar to that of the interior of the front portion 7 of the fixing component.

The first cylindrical part 15 has an annular lip 18 which clips into a corresponding annular recess in the nut. The skid washer 14 is thus freely rotatable within the nut. To assist such free rotation, the nut is advantageously provided with an "air bearing", i.e. an air gap is created between the skid washer and the nut. As seen in the figures, the air bearing is formed by an annular recess 19 in that part of the nut 4 which is in contact with the forward face of the skid washer, i.e. the face opposite to the inclined surface 8.

The second cylindrical part 17 of the skid washer is sized so as to fit around the seal 3. Thus, the skid washer acts to automatically locate and centre the seal 3, which results in improved sealing onto the cable 5.

In the embodiment of figures 1 and 2, the support member 10 is formed as a simple hollow cylinder in shape. To provide the optimum support to the front threaded portion 7 of the fixing component 2 upon tightening of the compression nut 4, it is considered that the support member 10 should extend along at least one half, and preferably two thirds, of the length of the front threaded portion 7. The support member 10 could in theory extend the full length of the front threaded portion 7 but then practical problems would arise over the correct seating of the seal 3 within the gland.

The seal 3 is of such a length that, before the nut 4 is screwed any significant distance onto the fixing component 2, it is contacted by but not forced inwardly by the skid washer 14.

As is obvious from a consideration of figure 2 that, when the compression nut 4 is fully tightened, the rearward movement of the nut 4 and the skid washer 14 force the seal 3 inwardly to grip and seal against the cable 5; in the final position, the seal 3 actually moves into the forward aperture of the nut 4.

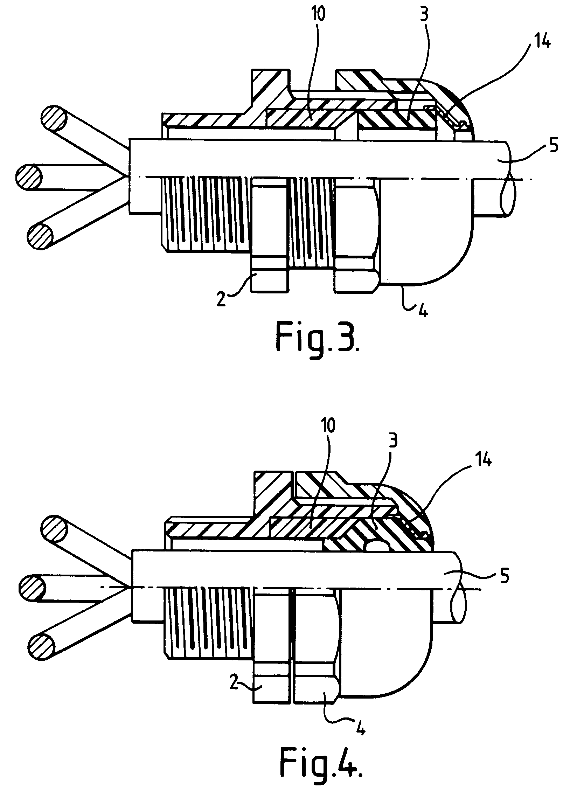

The embodiment of figures 3 and 4 differs from that of figures 1 and 2 only in the shape of the annular support member 10. The forward face of the member 10 is inclined, the inclination being in an opposite sense to that of part 16 of the skid washer 14. Thus, the support member 10 provides a second frusto-conical surface which, upon tightening of the nut 4, forces the seal 3 radially inwardly. In the final position of the nut 4, the seal 3 contacts the cable 5 around two distinct areas, thereby providing an improved gripping and sealing action.

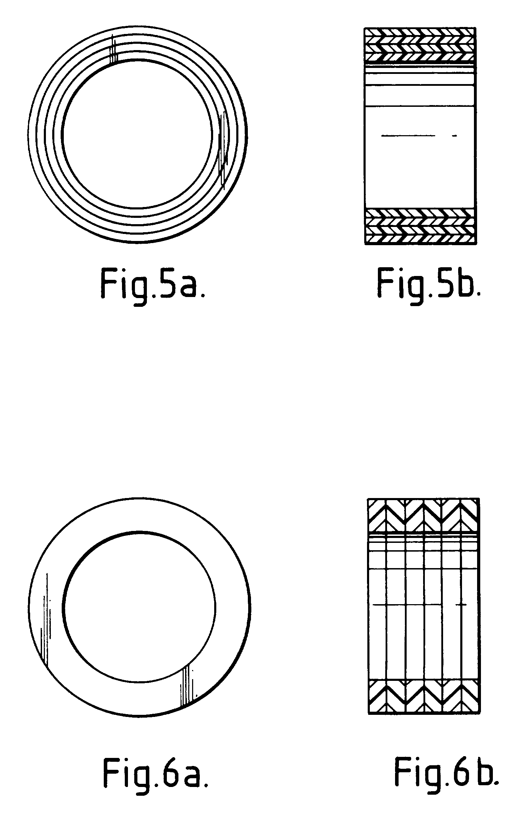

Figures 5 to 9 show alternative forms of the annular support member 10. It will be appreciated, however, that all of the forms are substantially cylindrical in overall shape. The generally hollow cylindrical shape is necessary to provide the requisite support to the front portion 7 of the fixing component 2.

The support member of figures 5a and 5b is formed of a number of concentric hollow cylinders.

The member of figures 6a and 6b is formed of a number of similar rings.

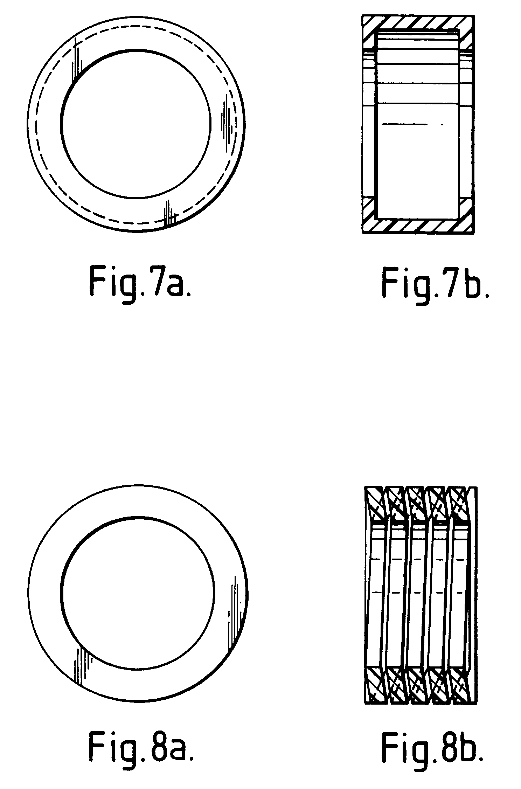

The member of figures 7a and 7b is formed with a central inner annular recess.

The member of figures 8a and 8b is in the form of a helical spring. In practice the resilience of the spring barely has any effect because the seal deforms so much more readily than the spring.

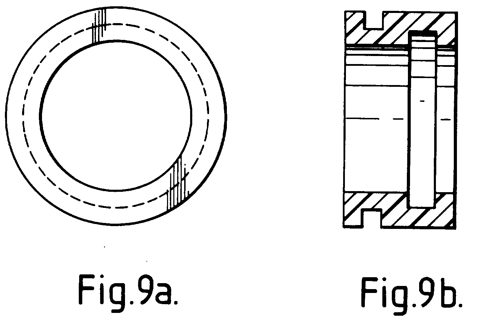

The member of figures 9a and 9b has one external and one internal annular recess.

## Claims

1. A plastics cable gland (1) for an electrical enclosure comprising a fixing component (2), a resilient internal seal (3) and a compression nut (4), each with a bore therethrough for the cable (5), the fixing component having a rear portion (6) and a front threaded portion (7), the compression nut (4) being threaded for engagement on the front threaded portion (7), wherein the front threaded portion (7) has a larger diameter than the rear portion (6) both externally and internally, wherein the compression nut (4) comprises an internal inclined surface (8) which in use abuts the seal (3) whereby tightening of the compression nut (4) on the fixing component (2) forces at least part of the seal (3) inwardly to grip the cable (5), the cable gland (1) being characterised by a substantially rigid annular support member (10) within the fixing component (2) to the rear of the seal (3), the said support member (10) having an external diameter the same or only slightly less than the internal diameter of the front portion (7) of the fixing component (2) and having an internal diameter substantially the same as the internal diameter of the rear portion (6) of the fixing component (2).

2. A cable gland according to claim 1, wherein the support member comprises a plurality of concentric sleeves.

3. A cable gland according to claim 1, wherein the support member comprises a plurality of similar ring members.

4. A cable gland according to claim 1, wherein the support member is formed helically.

5. A cable gland according to claim 1, wherein the support member has an inclined face which in use abuts the seal.

6. A cable gland according to any preceding claim wherein the inclined face (8) of the nut (4) is provided by a separate rotatable skid washer (14) mounted inside the compression nut (4).

7. A cable gland according to claim 6, wherein the skid washer (14) clips into the compression nut (4).

8. A cable gland according to claim 6 or 7, wherein an air bearing is provided between the skid washer (14) and the compression nut (4).

9. A cable gland according to any of claims 6 to 8, wherein the skid washer (14) has a hollow cylindrical rear part (17) which surrounds the forward end of the seal (3).

## Patentansprüche

1. Eine Kabelverschraubung (1) aus Kunststoff für ein elektrisches Gehäuse, umfassend ein Befestigungselement (2), eine elastische Innendichtung (3) und eine Druckmutter (4), wobei jeder dieser Teile mit einer Durchgangsbohrung für das Kabel (5) versehen ist, das Befestigungselement einen hinteren Abschnitt (6) und einen vorderen mit Gewinde versehenen Abschnitt (7) aufweist, die Druckmutter (4) zwecks Eingriff mit dem vorderen mit Gewinde versehenen Abschnitt (7) ein Gewinde aufweist, der vordere mit Gewinde versehene Abschnitt (7) sowohl außen als auch innen einen größeren Durchmesser aufweist als der hintere Abschnitt (6), die Druckmutter (4) eine geneigte Innenfläche (8) umfaßt, die im Einsatz an die Dichtung (3) anschließt, so daß Anziehen der Druckmutter (4) an das Befestigungselement (2) mindestens einen Teil der Dichtung (3) einwärts preßt, so daß sie das Kabel (5) umfaßt, und zwar ist die Kabelverschraubung (1) dadurch gekennzeichnet, daß sie innerhalb des Befestigungselements (2) hinter der Dichtung (3) ein im wesentlichen starres ringförmiges Abstützelement (10) aufweist, wobei das besagte Abstützelement (10) einen Außendurchmesser besitzt, der gleich groß oder nur wenig kleiner ist als der Innendurchmesser des vorderen Abschnitts (7) des Befestigungselements (2), und einen Innendurchmesser besitzt, der im wesentlichen gleich groß ist wie der Innendurchmesser des hinteren Abschnitts (6) des Befestigungselements (2).

2. Eine Kabelverschraubung nach Anspruch 1, bei der das Abstützelement eine Mehrzahl von konzentrischen Hülsen umfaßt.

3. Eine Kabelverschraubung nach Anspruch 1, bei der das Abstützelement eine Mehrzahl von gleichartigen Ringelementen umfaßt.

4. Eine Kabelverschraubung nach Anspruch 1, bei der das Abstützelement spiralförmig gestaltet ist.

5. Eine Kabelverschraubung nach Anspruch 1, bei der das Abstützelement eine schräge Fläche aufweist, die im Gebrauch an die Dichtung anschließt.

6. Eine Kabelverschraubung nach einem der vorstehenden Ansprüche, bei der die schräge Fläche (8) der Mutter (4) durch eine getrennte, innerhalb der Druckmutter (4) angeordnete drehbare Gleitscheibe (14) gebildet wird.

7. Eine Kabelverschraubung nach Anspruch 6, bei der sich die Gleitscheibe (14) in die Druckmutter (4) klemmen läßt.

8. Eine Kabelverschraubung nach Anspruch 6 oder 7, bei der zwischen der Gleitscheibe (14) und der Druckmutter (4) ein Luftlager vorgesehen ist.

9. Eine Kabelverschraubung nach einem der Ansprüche 6 bis 8, bei der die Gleitscheibe (14) einen hohlen, zylindrischen hinteren Abschnitt (17) aufweist, der das vordere Ende der Dichtung (3) umgibt.

## Revendications

1. Presse-étoupe en plastique (1) pour armoire électrique comprenant un élément de fixation (2), un joint intérieur souple (3) et un écrou de compression (4), au travers de chacun desquels est prévu un alésage pour le câble (5), l'élément de fixation ayant une partie arrière (6) et une partie avant filetée (7), l'écrou de compression (4) étant fileté pour s'engager sur la partie avant filetée (7), dans lequel la partie avant filetée (7) a un plus grand diamètre que la partie arrière (6), tant extérieurement qu'intérieurement, dans lequel l'écrou de compression (4) comporte une surface inclinée intérieure (8) qui, en utilisation, bute contre le joint (3), si bien que le serrage de l'écrou de compression (4) sur l'élément de fixation (2) pousse au moins une partie du joint (3) vers l'intérieur pour qu'il serre le câble (5), le presse-étoupe (1) étant caractérisé par un élément de support annulaire essentiellement rigide (10) à l'intérieur de l'élément de fixation (2) à l'arrière du joint (3), ledit élément de support (10) ayant un diamètre extérieur égal ou seulement légèrement inférieur au diamètre intérieur de la partie avant (7) de l'élément de fixation (2) et ayant un diamètre intérieur essentiellement identique au diamètre intérieur de la partie arrière (6) de l'élément de fixation (2).

2. Presse-étoupe selon la revendication 1, dans lequel l'élément de support comporte une pluralité de manchons concentriques.

3. Presse-étoupe selon la revendication 1, dans lequel l'élément de support comprend une pluralité d'éléments annulaires identiques.

4. Presse-étoupe selon la revendication 1, dans lequel l'élément de support est formé hélicoïdalement.

5. Presse-étoupe selon la revendication 1, dans lequel l'élément de support a une face inclinée qui, en utilisation, bute contre le joint.

6. Presse-étoupe selon l'une quelconque des revendications précédentes, dans lequel la face inclinée (8) de l'écrou (4) est assurée par une rondelle de glissement rotative séparée (14) montée à l'intérieur de l'écrou de compression (14).

7. Presse-étoupe selon la revendication 6, dans lequel la rondelle de glissement (14) s'enclenche dans l'écrou de compression (4) .

8. Presse-étoupe selon la revendication 6 ou 7, dans lequel un espace d'air est prévu entre la rondelle de glissement (14) et l'écrou de compression (4).

9. Presse-étoupe selon l'une quelconque des revendications 6 à 8, dans lequel la rondelle de glissement (14) a une partie arrière cylindrique qui entoure l'extrémité avant du joint (3).
